Europäisches Patentamt

European Patent Office

Office européen des brevets

(11) Publication number: **0 083 669**
**B1**

(12) **EUROPEAN PATENT SPECIFICATION**

(45) Date of publication of patent specification: **12.03.86**

(51) Int. Cl.⁴: **B 60 G 15/06, F 16 F 9/54**

(21) Application number: **81306185.0**

(22) Date of filing: **31.12.81**

(54) Strut for Mcpherson type automobile suspensions.

(43) Date of publication of application:
**20.07.83 Bulletin 83/29**

(45) Publication of the grant of the patent:
**12.03.86 Bulletin 86/11**

(84) Designated Contracting States:
**DE FR GB**

(56) References cited:
DE-A-2 514 456
FR-A-2 163 323
FR-A-2 231 555
FR-A-2 437 310
FR-A-2 463 016
GB-A-2 050 968
JP-A-56 160 442
US-A-3 430 977
US-A-3 941 401

(73) Proprietor: **KAYABA KOGYO KABUSHIKI KAISHA**
**Sekai Boeki Center Bldg., 4-1 2-chome**
**Hamamatsu-cho Minato-ku**
**Tokyo (JP)**

(72) Inventor: **Mizumukai, Ken**
**No. 52, Shimozakai Higashishinmachi**
**Iwakura-shi Aichi-ken (JP)**
Inventor: **Higuchi, Shinichi**
**No. 205, Daini Kosei Shataku No. 2637, Dota**
**Kani-cho Kani-gun Gifu-ken (JP)**

(74) Representative: **Webb, Frederick Ronald et al**
**G.F. Redfern & Co. Marlborough Lodge 14**
**Farncombe Road**
**Worthing West Sussex BN11 2BT (GB)**

Courier Press, Leamington Spa, England.

## Description

The present invention relates to a tubular member forming the cylinder of liner type shock absorbers and a knuckle bracket constructed from sheet metal and relates more particularly to a strut for McPherson type automobile suspensions, in which the said knuckle bracket parts for fitting the bearing bush, i.e., the bearing spindle of the wheel brake and the said tubular member, are fitted at the lower end in the through hole of the said knuckle bracket and fixed by forced-push fitting, welding or other means.

Constructions of such a type are well-known, for instance, from US Patent No. 3,941,401. The knuckle bracket of the strut described in this specification is formed from sheet metal and therefore it is better in that it offers low manufacturing costs and light weight compared with the common knuckle brackets which are formed from forged steel or cast iron. In addition, it is general knowledge that a cylindrical axle bracket is already being used in practice which has a bracket part for fitting the knuckle spindle at one side of a strut formed by the first bracket with a U-shaped cross-section covering three fourths of the outer circumference of a tubular member in a strut and the second bracket with a W-shaped cross-section fitted in the opening part of the first bracket.

However, where these well-known struts for McPherson type suspensions are used in practice, the maximum bending stress is applied to that part of the tubular member which is fitted in the upper end of the knuckle bracket. Since the bending force occurring between the tubular member and the knuckle bracket causes the corresponding part of the tubular member to deform elastically with repeated vibration occurring, cracks or fractures may develop in the tubular member due to bending fatigue and there is a danger of automobile suspensions breaking, thus causing serious danger.

These defects may be lessened by increasing the thickness of the particular part of the conventional above-mentioned tubular members or by welding a reinforcing sleeve fitted to the particular part of the tubular members as disclosed in the Specification of US Patent No. 3,430,977; however, such means will nullify the low cost and weight advantages to be obtained with the use of a knuckle bracket formed from sheet metal.

Therefore, an object of the present invention is to use a knuckle bracket made of sheet metal which has low manufacturing costs and a light weight and acts as a strut for McPherson type suspensions which, with use of quite simple means, reduces and renders uniform the maximum bending stress occurring in the tubular member at the part fitted in the upper end of the knuckle bracket.

A strut which partially fulfils these requirements is known from JP—A—56 160 442, but this does not result in uniform bending stresses in the tubular member.

According to the invention, there is provided a strut for McPherson type automobile suspensions, wherein a tubular member forming the cylinder of a liner type shock adsorber is provided with a knuckle bracket for fitting a knuckle spindle at the lower end to the opening part of a first bracket forming part of said knuckle bracket, wherein said knuckle bracket consists of said first bracket which is made of sheet with a U-shaped cross-section and a second bracket also made of sheet metal but with a W-shaped profile, and which is inserted into the first bracket, the upper end of the second bracket having a part extending beyond said first bracket and consisting of a back wall in contact with and supporting the outer wall of said tubular member and a pair of facing walls extending forward at right angles from both side front edges of the said back wall, characterised in that the front edges of the pair of facing walls in the part of said second bracket are formed as tapered parts inclined backwards towards said back wall, whereby the bending stress in the part of the tubular member reinforced by the part of the second bracket, is rendered uniform.

Thus, when the knuckle bracket is fitted to the tubular member, the extension of the second bracket of the said knuckle bracket is placed along the outer circumference of the tubular member so that the extended part of the knuckle bracket serves to reinforce that part of the tubular member which receives the maximum bending stress in the strut.

In this way, the maximum bending stress applied to the tubular member is reduced to a low value, so that destruction of the tubular member may be prevented and its service life may be lengthened considerably. Moreover, even though the knuckle bracket is provided with the extended part of the second bracket, its original function is not at all affected nor does this arrangement lead to major increases in cost.

Furthermore, since the front edges of the facing walls in the extended part are formed as tapered parts inclined backwards towards the back wall, the bending stress occurring in the part of the tubular member reinforced by the extended part is rendered uniform.

When holes are formed in these facing walls in the extended part to allow a brake hose to pass through, it is possible to avoid difficulties associated with the fitting of any separate brackets for supporting the brake hose.

The invention and its potential applications will now be further described with reference to the drawings, in which:—

Figure 1 is a side view of a strut according to the present invention;

Figure 2 is a plan view of the strut of Figure 1;

Figure 3 is a perspective view of the essential structure parts of the strut of Figures 1 and 2;

Figure 4 is a side view of the first bracket of a knuckle bracket according to the invention;

Figure 5 is a plan view of the first bracket of Figure 4;

Figure 6 is a side view of the second bracket forming the knuckle bracket of Figures 4 and 5; and

Figure 7 is a plan view of the second bracket of Figure 6.

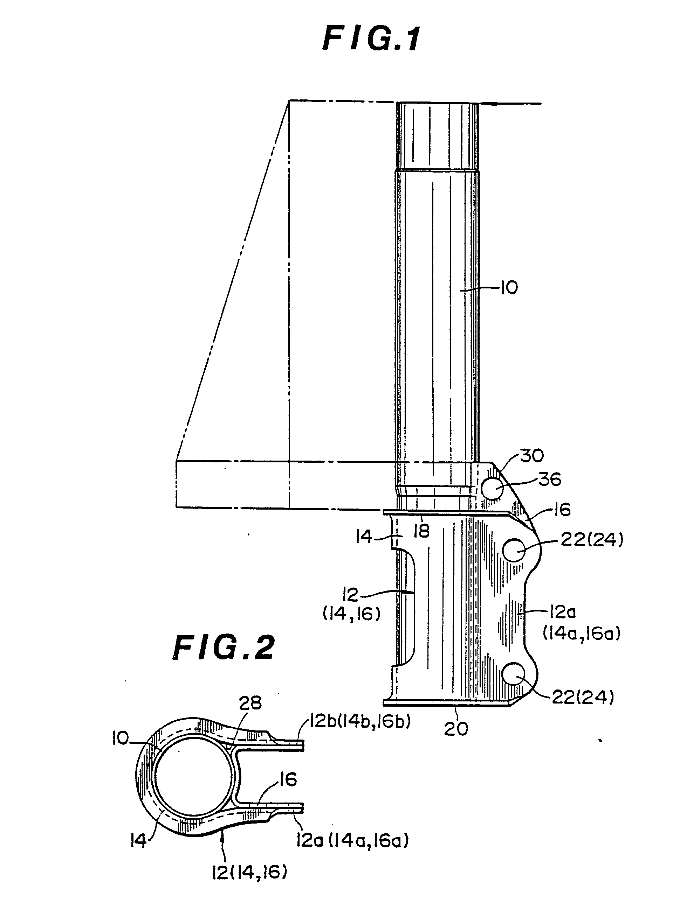

Figures 1, 2 and 3 show a tubular member (10), which forms the cylinder of a liner type shock absorber and is located in a strut for McPherson type automobile suspensions.

It is already well known to provide this tubular member (10) at the lower end with a knuckle bracket (12) which has a pair of flange parts (12a) (12b) for fitting a bearing bush, i.e. bearing spindle of an automobile wheel brake.

The knuckle bracket (12) consists of a first bracket (14) and a second bracket (16), both of which are formed from sheet metal to reduce product weight and costs.

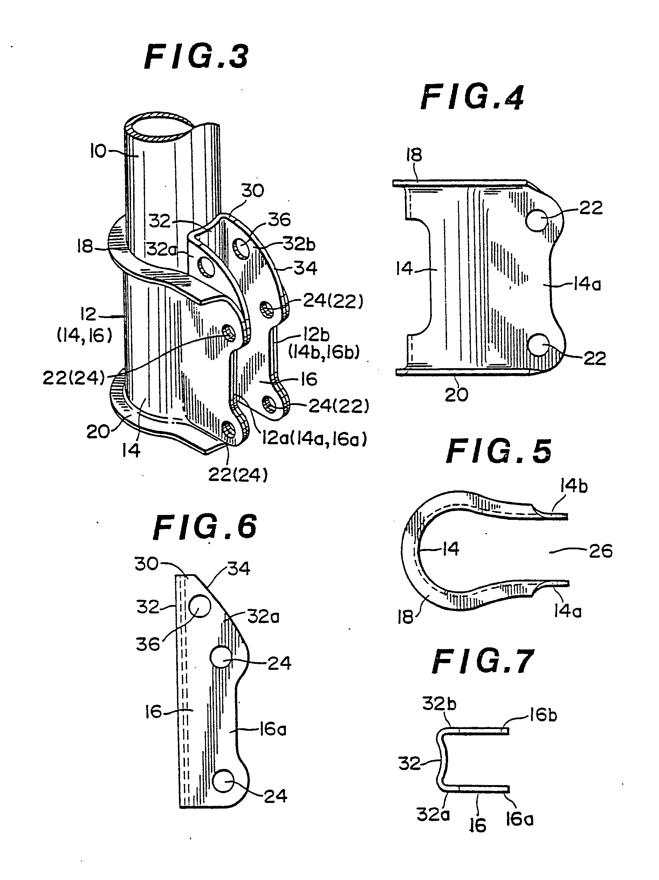

As can be seen from Figures 4 and 5, the first bracket (14) is formed by bending sheet metal so as to produce a U-shaped cross-section and is provided at both the upper and lower ends with reinforcing edges (18) (20) extending horizontally and with a pair of bracket parts (14a) (14b) extending forward, in which bracket parts (14a) (14b) fitting holes (22) are formed for fitting the said bearing spindle.

Moreover, as shown in Figure 6 and 7, the second bracket (16) is formed by bending sheet metal so as to produce a W-shaped cross-section, and fitting holes (24) are bored in the pair of bracket parts (16a) (16b) extending forward, and mating with the fitting holes (22) of the said first bracket (14).

As can be seen from Figure 2, the second bracket (16) is inserted into the first bracket (14) through the opening part (26) (see Figure 5) and fitted so as to ensure that the respective pairs of bracket parts (14a) and (16a), (14b) and (16b) mate with the fitting holes (22) and (24). If necessary, they may be combined to form an integral body by welding or other means. The knuckle bracket (12) thus formed by the first bracket (14) and the second bracket (16) has a nearly tubular through hole (28) at the center, into which hole (28) the said tubular member (10) is inserted at the lower end and force-push fitted, welded or joined by other means.

In the above-mentioned case, as can particularly be seen from Figure 3 the second bracket (16) forming the knuckle bracket (12) extends beyond the upper end of the first bracket (14) and forms a part (30), which part (30) is an essential element of the present invention.

The part (30) consists of a back wall (32) extending upward from the body of the second bracket (16) and extensions of the pair of bracket parts (16a) (16b), i.e., a pair of facing walls (32a) (32b) extending forward at right angles from the front side edges of the said back wall (32), and the back wall (32) of the part (30) contacts and supports the outer surfaces of the said tubular member (10) to reinforce that part in the tubular member (10) which receives the maximum bending stress.

As shown, the front edges of the pair of facing walls (32a) (32b) in the part (30) are formed as tapered parts (34) inclined backward; in this way, the bending stress of the part reinforced by the part (30) in the tubular member (10) in rendered uniform as indicated by the bending stress diagram marked by the double-dot-dash line in Figure 1.

Also, when these facing walls (32a) (32b) are provided with holes (36) to allow a brake hose to pass through, it is possible to avoid the necessity of fitting any separate bracket.

**Claims**

1. A strut for McPherson type automobile suspensions, wherein a tubular member (10) forming the cylinder of a liner type shock absorber is provided with a knuckle bracket (12) for fitting a knuckle spindle at the lower end of the opening part of a first bracket (14) forming part of said knuckle bracket (12), wherein said knuckle bracket (12) consists of said first bracket (14) which is made of sheet metal with a U-shaped cross-section and a second bracket (16) also made of sheet metal but with W-shaped profile and which is inserted into the first bracket (14), the upper end of the second bracket (16) having a part (30) extending beyond said first bracket (14) and consisting of a back wall (32) in contact with and supporting the outer wall of said tubular member (10) and a pair of facing walls (32a) (32b) extending forward at right angles from both side front edges of the said back wall (32), characterised in that the front edges of the pair of facing walls (32a) (32b) in the part (30) of said second bracket (16) are formed as tapered parts (34) inclined backwards towards said back wall, whereby the bending stress in the part of the tubular member (10) reinforced by the part (30) of the second backet (16), is rendered uniform.

2. A strut as claimed in Claim 1, characterised in that holes (36) for the passage of a brake hose are formed, in the pair of facing walls (32a) (32b) in the extended part (30) of said second bracket (16)

**Patentansprüche**

1. Verstrebung für McPherson Fahrzeug federungen, wobei ein rohrförmiges Teil (10) das den Zylinder eines linearen Stoßdämpfers bildet mit einer Gelenkklammer (12) versehen ist zum Befestigen des unteren Endes einer Gelenk spindel am offenen Teil einer ersten Klammer (14), die einen Teil der Gelenkklammer (12) bildet und wobei die Gelenkklammer (12) aus dieser ersten Klammer (14), die aus einem Metallblech mit U-förmigen Querschnitt hergestellt worden ist und einer zweiten Klammer (16) ebenfalls aus Metallblech, aber mit einem W-förmigen Profil besteht, die in die erste Klammer (14) eingesetzt ist, wobei ferner das obere Ende der zweiten Klammer (16) ein Teil (30) aufweist, das sich unter die erste Klammer (14) erstreckt und aus einer Rückwand (32), die in Berührung mit der Außen- wand des rohrförmigen Teiles (10) diese, stützend steht, und einem Paar Seitenwänden (32a, 32b) besteht, die sich im rechten Winkel von den beiden Seitenvorderkanten der Rückwand (32) nach vorn erstrecken, dadurch gekennzeichnet, daß die Vorderkanten der Seitenwandpaare (32a, 32b) in dem Teil (30) der zweiten Klammer (16) als abgeschrägte Teile (34) ausgebildet sind, die rückwärts in Richtung auf die Rückwand geneigt sind, so daß die Biegebeanspruchung in dem durch das Teil (30) der zweiten Klammer (16) verstärkten Teil des rohrförmigen Teils (10) vergleichmäßigt wird.

2. Verstrebung nach Anspruch 1, dadurch gekennzeichnet, daß Bohrungen (36) zur Durchführung eines Bremsschlauches in den Seitenwandpaaren (32a, 32b) in dem verlängerten Teil (30) der zweiten Klammer (16) vorgesehen sind.

## Revendications

1. Montant pour suspension automobile du type McPherson dans laquelle un élément tubulaire (10) formant le cylindre d'un amortisseur du type chemisé est muni d'un support à genouillère (12) pour monter un axe de genouillère à l'extrémité inférieure de la partie ouvrante d'un premier support (14) faisant partie dudit support à genouillère (12), et dans lequel ledit support à genouillère (12) comprend ledit premier support (14) réalisée en tôle avec une section en U et un second support (16) également réalisé en tôle mais avec un profil en W et qui est inséré dans le premier support (14), l'extrémité supérieure du deuxième support (16) ayant une partie (30) s'étendant audelà dudit premier support (14) et formant une paroi arrière (32) en contact avec et supportant la paroi extérieure dudit élément tubulaire (10) et une paire de parois en vis-à-vis (32a, 32b) s'étendant vers l'avant à angle droit à partir des deux bords latéraux de ladite paroi arrière (32), caractérisé par le fait que les bords de la paire de parois en vis-à-vis (32a, 32b) de la partie (30) dudit deuxième support (16) forment des parties en pointe (34) inclinées en arrière vers ladite paroi arrière, de sorte que l'effort de flexion dans la partie de l'élément tubulaire (10) renforcée par la partie (30) du second support (16) est rendu uniforme.

2. Montant selon la revendication 1, caractérisé par le fait que des trous (36) pour le passage d'un conduit de freinage sont formés dans la paire de parois en vis-à-vis (32a, 32b) dans la partie prolongée (30) dudit deuxième support (16).

# FIG.1

# FIG.2

# FIG.3

# FIG.4

# FIG.5

# FIG.6

# FIG.7